# EUROPEAN PATENT SPECIFICATION

(11) **EP 0 861 020 B1**
(45) Date of publication and mention of the grant of the patent: **29.05.2002**
(21) Application number: 97929602.7
(22) Date of filing: 11.07.1997
(51) Int. Cl.: A01D 34/00

(54) **A MOWING MACHINE**
MÄHMASCHINE
MOISSONNEUSE-BATTEUSE

(30) Priority: 29.07.1996 EP 96202142
(43) Date of publication of application: 02.09.1998
(60) Divisional application: 01203331.2
(73) Proprietor: MAASLAND N.V., 3155 PD Maasland (NL)
(72) Inventor: KOORN, Maarten, NL-3123 CP Schiedam (NL)
(74) Representative: Corten, Maurice Jean F.M.
(86) International application number: NL9700406
(87) International publication number: WO9804112

(56) References cited:
- EP-A- 0 682 859
- EP-A- 0 772 967
- WO-A-90/12492
- DE-A- 4 301 821
- NL-A- 8 701 155

## Description

The invention relates to a mowing machine comprising a cutter bar, a crushing device including a rotor provided with crushing elements, and adjusting means by means of which the distance between the crushing elements and the cutter bar can be adjusted.

Such a mowing machine is known from e.g. EP-A-0682859.

Depending on the crop conditions of the plot to be mown, in such a mowing machine the distance between the crushing elements and the cutter bar is adjusted. This has the disadvantage that the farmer has to rely on his experience or first has to work a strip of crop before being able to determine the correct distance.

The invention has for its object to provide a mowing machine of the above kind in which the above-mentioned drawback does not occur or at least is obviated to a considerable extent.

In accordance with the invention, this is achieved in that the mowing machine comprises measuring means with the aid of which it is possible to determine the number of revolutions and/or the force by which the crushing device is driven. By measuring the number of revolutions and/or the force there can be established whether the rotor is rotating sufficiently smoothly, which constitutes an indication for a proper crushing function. For example, the rotor will drag and will have an insufficient crushing function when too much crop is supplied to the rotor by the cutter bar, because the distance between rotor and cutter bar is too small. The mowing machine may comprise indication means, such as a display by means of which the farmer is informed about the number of revolutions and/or the force by which the crushing device is driven. On the basis of this information, the farmer is able to adjust an optimum distance between rotor and cutter bar thus obtaining a proper crushing function.

For the purpose of automating the adjustment of the distance between the cutter bar and the rotor, according to a preferred embodiment of the invention, the mowing machine comprises a control mechanism by means of which the adjusting means are activated on the basis of signals supplied by the measuring means. In order to obtain a stable control, i.e. a non-permanent adjustment of the rotor with respect to the cutter bar, according to again an other preferred embodiment of the invention, the control mechanism includes an adjustable threshold value for activating the adjusting means. In accordance with a further preferred embodiment of the invention, the mowing machine comprises signal means supplying an acoustic or optical signal when the crushing device is crushing the crop insufficiently. In this manner the farmer is informed in an early stage about the function of the crushing device.

In a further preferred embodiment of the invention, the measuring means comprise a revolution counter with the aid of which the number of revolutions of the rotor can be determined. A decreasing number of revolutions may be an indication that the crop is crushed insufficiently. According to again another preferred embodiment of the invention, the measuring means comprise a torque meter by means of which the drive torque of the rotor can be determined. Also the drive torque of the rotor is an indication whether the crusher is properly functioning or not. According to a further preferred embodiment of the invention, the measuring means comprise a dynamometer. The dynamometer may include strain gauges which are disposed on the bearings of the rotor. When there is supplied much crop to the crusher, the pressure on the bearings will increase, which can be measured by means of the strain gauges.

In accordance with a further preferred embodiment of the invention, the measuring means comprise a feeler which is disposed between the rotor and the frame of the mowing machine. In a preferred embodiment of the invention, the feeler is constituted by a beater bar with a dynamometer mounted thereon.

Preferably, the adjusting means comprise a cylinder or an electromotor. By means of the cylinder or the electromotor the rotor can be adjusted in an approximately horizontal plane with respect to the cutter bar. In accordance with a further preferred embodiment of the invention, the adjusting means are arranged on the frame of the mowing machine at either side of the rotor. In still another preferred embodiment of the invention, both the rotor and a beater bar can be adjusted with respect to the cutter bar, while it is still possible to adjust the distance between the rotor and the beater bar.

In order to achieve a smooth adjustment of the rotor, according to a preferred feature, the adjusting means comprise a transmission.

The invention will now be further explained with reference to exemplary embodiments as represented by the drawings, in which:

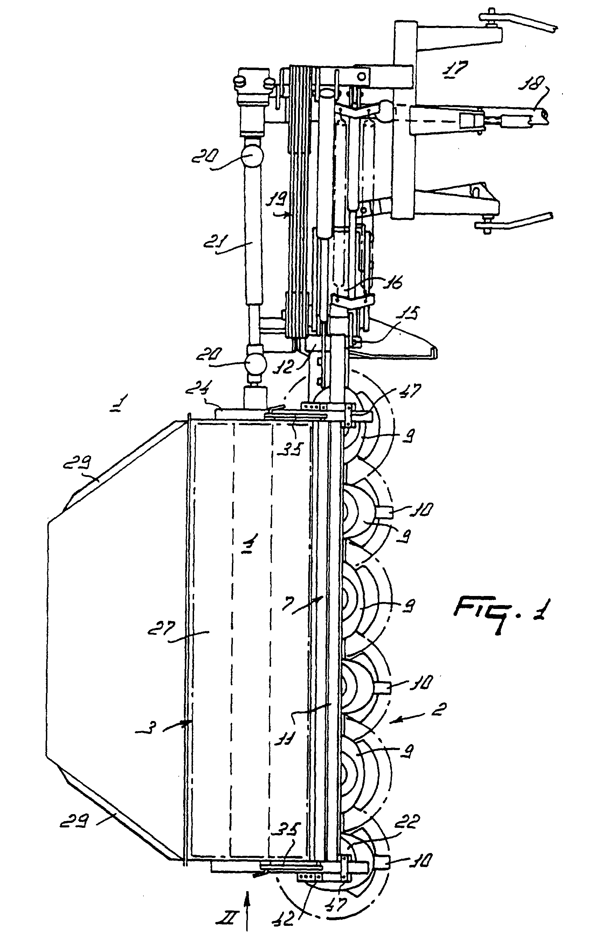

Figure 1 shows a plan view of an embodiment of a mower-conditioner not being part of the invention;
Figure 2 shows a side view of the mowing machine depicted in Figure 1;
Figure 3 shows a plan view of an embodiment of the mowing machine according to the invention, and
Figure 4 shows a side view of the mowing machine depicted in Figure 3.

The mowing machine 1 represented in the drawings comprises a mowing unit 2 and a crushing device 3 including a rotor 4 and crushing elements 5, as well as an element 7 constituting, in conjunction with this crushing device 3, a crop feed-through channel 6.

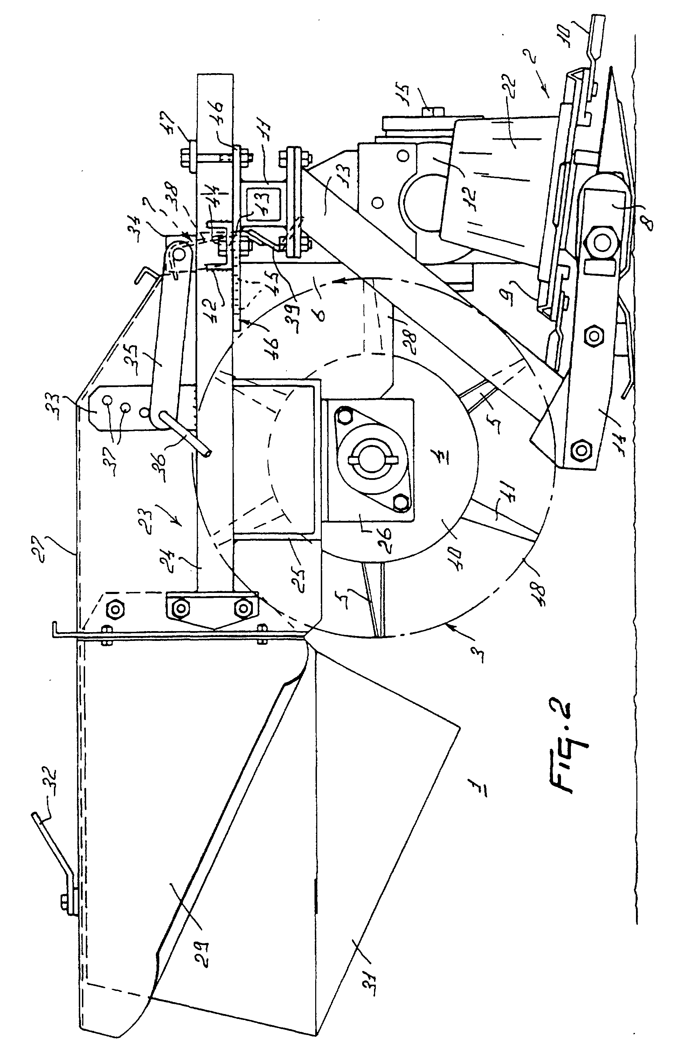

As depicted, the mowing unit 2 comprises a cutter bar 8, above which there are arranged a half-dozen mowing discs 9 which are capable of rotation about vertical axes and are provided with cutting blades 10. A suspension beam 11 is fitted above and parallel to the cutter bar 8. The connection between the cutter bar 8 and the suspension beam 11 is constituted at one end by a gearbox 12 (see Figure 2) and at the other by a supporting element 13 extending from the suspension beam 11 obliquely rearwards and downwards, and connected to this supporting element 13 near the foot of the latter, a connecting element 14, extending essentially horizontally, which is also connected with the cutter bar 8.

The mowing machine is in the usual way capable of being swung about an approximately horizontal pivot shaft 15 which extends in the direction of travel in operative condition and is connected with a carrying arm 16 comprising a carrying frame 17 which enables the mowing machine to be coupled to a three-point hitch of a tractor or a. similar vehicle. The drive of the mowing machine is effected from a power-take-off shaft 18 of a (non-shown) tractor through various transmission elements in a gearbox 12 connected to the carrying arm 16, from which gearbox 12 the mowing unit 2 is driven by a belt transmission drive 19 and the various transmission elements in the gearbox 12, and the drive of the crushing device 3 is effected by means of an intermediate shaft 21 provided with universal joints 20.

The outermost mowing disc on the side where the elements 13 and 14 form the connection between the cutter bar 8 and the suspension beam 11 is provided with a hat-shaped crop guide device 22.

There is provided a frame 23 slidably connected with the suspension beam 11, which frame 23 comprises supporting beams 24, a bracket 25 fixed in position under each of these, and an angle plate 26 fixed in position under this bracket. The crushing device 3 is pivot-mounted between the angle plates 26. In addition, top-plate parts 27 and side-plate parts 28 and 29 are attached to the slidable frame 23, with the rear side-plate parts 29 being slanted inwardly in rearward direction and being bent outwardly at the bottom side. At the inside of the side-plate parts 29 there are provided further side plates 30, which have at their bottom side a part 31 extending inwardly and which can be moved further inwardly by means of a grip 32 to enable a desired swath limitation to be obtained.

Further, a first support 33 and a second support 34 are fixed in position on the supporting beams 24. A connecting strip 35 pivot-mounted in the second support 34 is capable of being fixed in position in the first support 33 by means of a shaft 36 and holes 37 such that the position of this connecting strip element 35 and, with that, the strip 38 which is fixedly fastened to the latter and extends in the longitudinal direction of the crushing device 3, with the beater bar 39 being attached to it, determines the desired size of the crop feed-through channel 6 (see Figure 2).

The rotor 4 of the crushing device 3 comprises a cylindrical carrier 40 on which the crushing elements 5 are disposed in mutually staggered positions. The crushing elements 5 are tapered, they have an I-section and they also protrude from the roller outwards. The outermost crushing elements 41 at either side of the cylindrical carrier 40 are flat, tapered and also protruding from the roller outwards. Thus, the outermost crushing elements are dagger-shaped and preferably made from a flat strip of spring steel having a thickness of approximately 3 mms. Viewed from above, the outermost crushing elements 41 are disposed at a distance of about one centimetre from the side-plate parts 28. Because, during operation, the dagger-shaped outermost flat crushing elements 41 move relatively close along the side-plate parts 28, any material for crushing which has adhered to the side-plate parts 28 or which has accumulated in the corners of the crop feed-through channel 6 is cut up. Since the cut-up crop winds less easily and is better removable, the rotor 4 is prevented from dragging, and the crop feed-through channel 6 and possibly the rotor 4 is/are prevented from getting clogged with crop. The application of a relatively thin strip of spring steel for the outermost crushing elements 41 offers the advantage that the crushing elements 41, when viewed in the direction of rotation of the rotor 4, are relatively rigid, whereas the crushing elements 41 in a direction perpendicular to the direction of rotation of the rotor 4 are capable of easily deflecting and springing back again. The latter may be the case when, for instance, foreign matter such as a piece of wood or stone lands in the rotor 4. It will be obvious that more than two dagger-shaped crushing elements 41 can be placed on the cylindrical carrier 40, and that the crushing elements 41 can be made of a different material having the same properties as spring steel, such as e.g. a synthetic material.

As has been set forth hereinbefore, it is possible to shift the frame 23, wherein the crushing device 3 is rotatably suspended, with respect to the cutter bar 8 and to fix it again in position. For this purpose, the two supporting beams 24 comprise, near the front, a U-section part 42 provided with a hole 43 in which a bolt 44 is inserted, which bolt 44 is optionally inserted in any one of a series of holes 45 in a strip 46 fixedly connected with the suspension beam 11 of the cutter bar 8. Near the end of the strips 46 there is also provided a clamping bracket 47, through which the box-like supporting beams 24 are fed and by means of which the supporting beams 24 can be clamped onto the strip 46.

The distance between the circle 48 described by the crushing elements 5, 41 and the cutter bar 8 can be adjusted by slightly loosening the clamping brackets 47 and removing the bolts 44 and shifting the supporting beams 24 with respect to the strips 46. When the correct distance has been set, the frame 23 can be fixed again by means of the suspension beam 11 of the cutter bar 8 by tightening the clamping brackets 47 and mounting the bolts 44. It will be obvious that the adjustment of the crushing device 3 in relation to the mowing unit 2 can also take place in a way different from what has been set forth hereinbefore. A continuous adjustment of the crushing device 3 with respect to the mowing unit 2 can be obtained, for instance, by adjusting the crushing device 3 by means of a spindle or a cylinder.

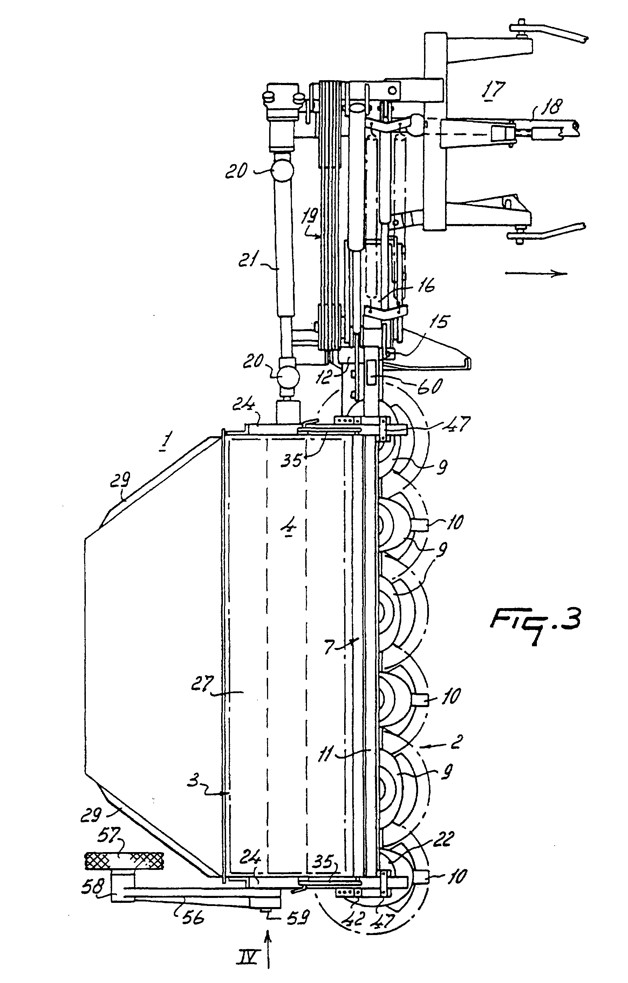

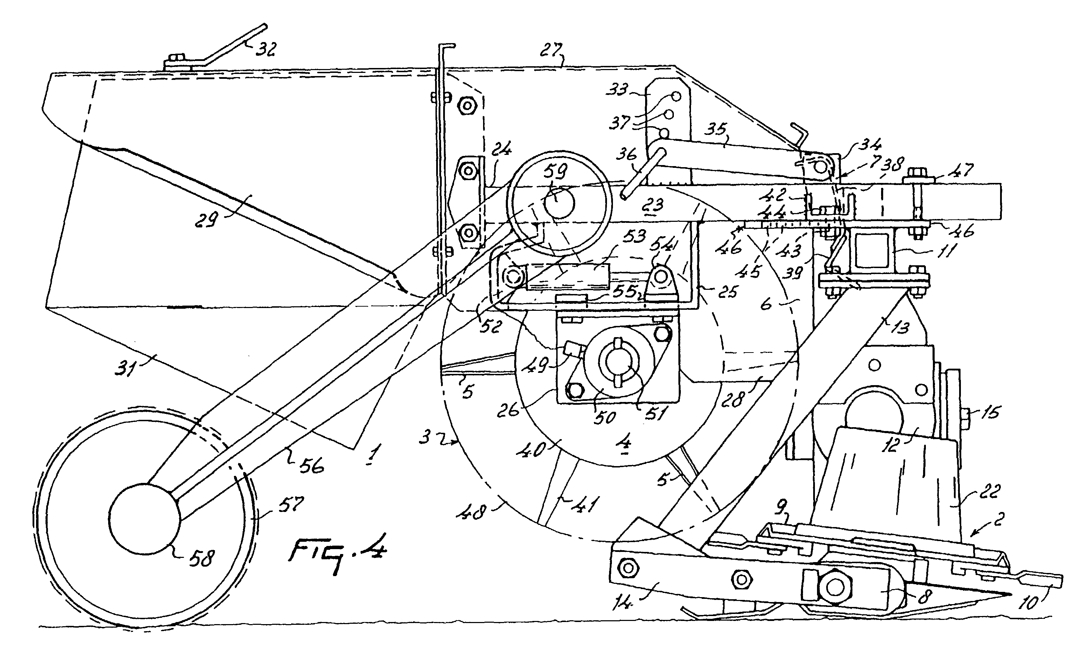

Figures 3 and 4 show an embodiment of the mowing machine according to the invention, which mowing machine comprises measuring means with the aid of which it is possible to determine the number of revolutions and/or the force by which the crushing device 3 is driven. As shown in Figure 4, the measuring means comprise dynamometers 49 disposed on the bearings 50 in which the rotor 4 is located. The dynamometers 49 include (non-shown) strain gauges by means of which the force can be determined which is exerted by the shaft 51 of the rotor 4 on the bearings 50. The force exerted by the shaft 51 on the bearings 50 of the rotor 4 then constitutes an indication of the amount of material supplied by the mowing unit 2 to the rotor 4.

Via lugs 52, rotatable cylinders 53 are arranged on the brackets 25. At their other ends, the cylinders 53 are rotatably disposed on lugs 54 which are connected with the angle plates 26 in which the rotor 4 is located. Viewed in the direction of travel, there are disposed (non-shown) slotted holes in the brackets 25, which slotted holes constitute a guide means for having the angle plates 26 and consequently the rotor 4 moved by means of the cylinders 53. For this purpose, the angle plates 26 are disposed in the slotted holes via longitudinal guide means 55. When the dynamometer 49 has established that the rotor 4 is overloaded because too much material is supplied thereto, the cylinders 53 are activated by a (non-shown) further control mechanism, so that the distance between the rotor 4 and the mowing unit 2 is increased.

To the outer supporting beam 24 of the mowing machine 1 there is furthermore attached a motor-driven wheel 57 via a rearwardly extending arm 56. The arm 56 is made of a T-section so as to be torsion-rigid. Near the wheel 57 there is further arranged a controllable hydraulic motor 58 by means of which the wheel 57 can be driven at a variable speed and/or torque. The other end of the arm 56 is hinge-connected about a horizontal shaft 59 with the supporting beam 24 of the frame 23. Furthermore, a (non-shown) torsion spring is disposed around the shaft 59, the arrangement being such that the wheel 57 is movable in height against spring action so as to be capable of adapting itself to unevennesses of the soil.

The mowing machine 1 further comprises a (non-shown) further control mechanism for driving the wheel 57. By means of the further control mechanism the number of revolutions and/or the torque of the wheel 57 can be adjusted. For this purpose, the further control mechanism comprises measuring means 60 disposed on the suspension beam 11, with the aid of which measuring means it is possible to determine the force which, during operation and with respect to the direction of travel of the machine, is exerted by the cutter bar 8 on the vehicle by which the mowing machine 1 is moved forward. The measuring means 60 comprise (non-shown) strain gauges which are adapted to measure the bending of the suspension beam 11, which is a measure for the above-mentioned force.

## Claims

1. A mowing machine comprising a cutter bar (8), a crushing device (3) including a rotor (4) provided with crushing elements (5), and adjusting means by means of which the distance between the crushing elements (5) and the cutter bar (8) can be adjusted, **characterized in that** the mowing machine (1) comprises measuring means with the aid of which it is possible to determine the number of revolutions and/or the force by which the crushing device (3) is driven.

2. A mowing machine as claimed in claim 1, **characterized in that** the mowing machine (1) comprises a control mechanism by means of which the adjusting means are activated on the basis of the signals supplied by the measuring means.

3. A mowing machine as claimed in claim 2, **characterized in that** the control mechanism includes an adjustable threshold value for the activation of the adjusting means.

4. A mowing machine as claimed in any one of the preceding claims, **characterized in that** the mowing machine (1) comprises signal means supplying an acoustic or optical signal when the crushing device (3) is crushing the crop insufficiently.

5. A mowing machine as claimed in any one of the preceding claims, **characterized in that** the measuring means comprise a revolution counter with the aid of which the number of revolutions of the rotor (4) can be determined.

6. A mowing machine as claimed in any one of the preceding claims, **characterized in that** the measuring means comprise a torque meter by means of which the drive torque of the rotor (4) can be determined.

7. A mowing machine as claimed in any one of the preceding claims, **characterized in that** the measuring means comprise a dynamometer (49).

8. A mowing machine as claimed in claim 7, **characterized in that** the dynamometer (49) includes strain gauges which are disposed on the bearings (50) of the rotor (4).

9. A mowing machine as claimed in any one of the preceding claims, **characterized in that** the measuring means comprise a feeler which is disposed between the rotor (4) and the frame (23) of the mowing machine (1).

10. A mowing machine as claimed in claim 9, **characterized in that** the feeler is constituted by a beater bar (39) with a dynamometer mounted thereon.

11. A mowing machine as claimed in any one of the preceding claims, **characterized in that** the adjusting means comprise a cylinder (53) or an electromotor.

12. A mowing machine as claimed in any one of the preceding claims, **characterized in that** the adjusting means are arranged on the frame (23) of the mowing machine (1) at either side of the rotor.

13. A mowing machine as claimed in any one of the preceding claims, **characterized in that** the adjusting means are mechanically activated by means of a feeler which is mounted on the frame (23) and comes into contact with the flow of crop during operation.

14. A mowing machine as claimed in claim 13, **characterized in that** the adjusting means comprise a transmission.

15. A mowing machine as claimed in any one of the preceding claims, **characterized in that** both the rotor and the beater bar can be adjusted with respect to the cutter bar in order to get an optimum distance between them.

16. A mowing machine as claimed in claim 16, **characterized in that** the distance between the rotor and the beater bar is adjustable.

## Patentansprüche

1. Mähmaschine mit einem Mähbalken (8), einer Quetschvorrichtung (3), die einen mit Quetschelementen (5) versehenen Rotor (4) enthält, sowie Stellvorrichtungen, mittels derer der Abstand zwischen den Quetschelementen (5) und dem Mähbalken (8) eingestellt werden kann,
**dadurch gekennzeichnet, daß** die Mähmaschine (1) eine Meßvorrichtung umfaßt, mit deren Hilfe es möglich ist, die Drehzahl und/oder die Kraft zu ermitteln, mit der die Quetschvorrichtung (3) angetrieben wird.

2. Mähmaschine nach Anspruch 1,
**dadurch gekennzeichnet, daß** die Mähmaschine (1) eine Steuervorrichtung umfaßt, mittels der die Stellvorrichtungen auf der Basis der von der Meßvorrichtung gelieferten Signale aktiviert werden.

3. Mähmaschine nach Anspruch 2,
**dadurch gekennzeichnet, daß** der Steuermechanismus einen einstellbaren Grenzwert zur Aktivierung der Stellvorrichtungen enthält.

4. Mähmaschine nach einem der vorhergehenden Ansprüche,
**dadurch gekennzeichnet, daß** die Mähmaschine (1) eine Signalvorrichtung umfaßt, die ein akustisches oder optisches Signal gibt, wenn die Quetschvorrichtung (3) das Gut nicht ausreichend quetscht.

5. Mähmaschine nach einem der vorhergehenden Ansprüche,
**dadurch gekennzeichnet, daß** die Meßvorrichtung einen Drehzahlmesser umfaßt, mit dessen Hilfe die Drehzahl des Rotors (4) ermittelt werden kann.

6. Mähmaschine nach einem der vorhergehenden Ansprüche,
**dadurch gekennzeichnet, daß** die Meßvorrichtung einen Drehmomentmesser umfaßt, mittels dessen das Antriebsmoment des Rotors (4) ermittelt werden kann.

7. Mähmaschine nach einem der vorhergehenden Ansprüche,
**dadurch gekennzeichnet, daß** die Meßvorrichtung einen Leistungsmesser (49) umfaßt.

8. Mähmaschine nach Anspruch 7,
**dadurch gekennzeichnet, daß** der Leistungsmesser (49) Dehnungsmesser enthält, die auf den Lagern (50) des Rotors (4) angeordnet sind.

9. Mähmaschine nach einem der vorhergehenden Ansprüche,
**dadurch gekennzeichnet, daß** die Meßvorrichtung einen Fühler umfaßt, der zwischen dem Rotor (4) und dem Rahmen (23) der Mähmaschine (1) angeordnet ist.

10. Mähmaschine nach Anspruch 9,
**dadurch gekennzeichnet, daß** der Fühler durch eine Schlagschiene (39) mit einem darauf angeordneten Leistungsmesser gebildet ist.

11. Mähmaschine nach einem der vorhergehenden Ansprüche,
**dadurch gekennzeichnet, daß** die Stellvorrichtungen einen Zylinder (53) oder einen Elektromotor umfassen.

12. Mähmaschine nach einem der vorhergehenden Ansprüche,
**dadurch gekennzeichnet, daß** die Stellvorrichtungen an dem Rahmen (23) der Mähmaschine (1) beiderseits des Rotors angeordnet sind.

13. Mähmaschine nach einem der vorhergehenden Ansprüche,
**dadurch gekennzeichnet, daß** die Stellvorrichtungen mechanisch mittels eines Fühlers aktiviert werden, der an dem Rahmen (23) angeordnet ist und im Betrieb mit dem Gutstrom in Berührung kommt.

14. Mähmaschine nach Anspruch 13,
**dadurch gekennzeichnet, daß** die Stellvorrichtungen ein Getriebe umfassen.

15. Mähmaschine nach einem der vorhergehenden Ansprüche,
**dadurch gekennzeichnet, daß** sowohl der Rotor als auch die Schlagschiene relativ zu dem Mähbalken einstellbar sind, um einen optimalen Abstand zwischen ihnen zu erzielen.

16. Mähmaschine nach Anspruch 16,
**dadurch gekennzeichnet, daß** der Abstand zwischen dem Rotor und der Schlagschiene einstellbar ist.

## Revendications

1. Faucheuse comprenant une barre de coupe (8), un dispositif de concassage (3) comprenant un rotor (4) muni d'éléments de concassage (5), et des moyens d'ajustement au moyen desquels la distance entre les éléments de concassage (5) et la barre de coupe (8) peut être ajustée, **caractérisée en ce que** la faucheuse (1) comprend des moyens de mesure avec l'aide desquels il est possible de déterminer le nombre de tours et/ou la force avec laquelle le dispositif de concassage (3) est entraîné.

2. Faucheuse selon la revendication 1, **caractérisée en ce que** la faucheuse (1) comprend un mécanisme de commande au moyen duquel les moyens d'ajustement sont actionnés en se basant sur les signaux délivrés par les moyens de mesure.

3. Faucheuse selon la revendication 2, **caractérisée en ce que** le mécanisme de commande comprend une valeur de seuil ajustable pour l'actionnement des moyens d'ajustement.

4. Faucheuse selon l'une quelconque des revendications précédentes, **caractérisée en ce que** la faucheuse (1) comprend des moyens de génération de signal délivrant un signal acoustique ou optique lorsque le dispositif de concassage (3) concasse la récolte de manière insuffisante.

5. Faucheuse selon l'une quelconque des revendications précédentes, **caractérisée en ce que** les moyens de mesure comprennent un compte-tours avec l'aide duquel le nombre de tours du rotor (4) peut être déterminé.

6. Faucheuse selon l'une quelconque des revendications précédentes, **caractérisée en ce que** les moyens de mesure comprennent un couplemètre au moyen duquel le couple d'entraînement du rotor (4) peut être déterminé.

7. Faucheuse selon l'une quelconque des revendications précédentes, **caractérisée en ce que** les moyens de mesure comprennent un dynamomètre (49).

8. Faucheuse selon la revendication 7, **caractérisée en ce que** le dynamomètre (49) comprend des jauges de contraintes qui sont disposées sur les paliers (50) du rotor (4).

9. Faucheuse selon l'une quelconque des revendications précédentes, **caractérisée en ce que** les moyens de mesure comprennent un palpeur qui est disposé entre le rotor (4) et le châssis (23) de la faucheuse (1).

10. Faucheuse selon la revendication 9, **caractérisée en ce que** le palpeur est constitué d'une barre de battage (39) avec un dynamomètre monté sur celle-ci.

11. Faucheuse selon l'une quelconque des revendications précédentes, **caractérisée en ce que** les moyens d'ajustement comprennent un cylindre (53) ou un moteur électrique.

12. Faucheuse selon l'une quelconque des revendications précédentes, **caractérisée en ce que** les moyens d'ajustement sont disposés sur le châssis (23) de la faucheuse (1) d'un côté ou de l'autre du rotor.

13. Faucheuse selon l'une quelconque des revendications précédentes, **caractérisée en ce que** les moyens d'ajustement sont actionnés mécaniquement au moyen d'un palpeur qui est monté sur le châssis (23) et qui vient en contact avec le flux de récolte durant le fonctionnement.

14. Faucheuse selon la revendication 13, **caractérisé en ce que** les moyens d'ajustement comprennent une transmission.

15. Faucheuse selon l'une quelconque des revendications précédentes, **caractérisée en ce qu'**à la fois le rotor et la barre de battage peuvent être ajustés par rapport à la barre de coupe afin d'obtenir une distance optimale entre eux.

16. Faucheuse selon la revendication 16, **caractérisée en ce que** la distance entre le rotor et la barre de battage est ajustable.
